# EUROPEAN PATENT APPLICATION

(11) **EP 2 848 394 A1**
(43) Date of publication of application: **18.03.2015**
(21) Application number: 14183317.8
(22) Date of filing: 03.09.2014
(51) Int. Cl.: B29C 73/04, B64F 5/00, B29C 73/26

(54) **Repair of a damaged composite structure**

(30) Priority: 05.09.2013 GB 201315852
(71) Applicant: Airbus Operations Limited, Bristol BS34 7PA (GB)
(72) Inventor: De Jong, Tjarko, BRISTOL, Bristol BS99 7AR (GB); Davies, Timothy, BRISTOL, Bristol BS99 7AR (GB)
(74) Representative: Grey, Ian Michael

(57) **Abstract**

A method of repairing a defect in a skin (1) of an aircraft wing made from a composite material is disclosed. The wing has a stringer (3) attached to an inner surface of the skin and the method comprises the steps of: cutting a section of stringer from the skin in the vicinity of the defect; positioning a repair plate (10) on the inner surface over the defect so that it extends between opposing cut ends (9) of the stringer; positioning a stringer repair part (16) on the repair plate, the stringer repair part being of a length sufficient to overlap each cut end of the stringer; attaching the repair plate to the skin; and, attaching the stringer repair part to the stringer in a region of overlap at each cut end. Apparatus for repairing a wing is also disclosed.

## Description

### Field of the Invention

This invention relates to the repair of a defect in a structure made from a composite material, for example carbon fibre reinforced polymer.

### Background of the Invention

Carbon fibre reinforced polymer has excellent strength-to-weight characteristics and can be used for many applications, including vehicle components such as components in aircraft, including components for aircraft wings. However, the composite components can be damaged, for example due to accidental impact forces. Due to the nature of carbon fibre reinforced polymer, composite components can be difficult to rework or reshape after the curing process has occurred. This makes carbon fibre reinforced polymer components difficult to repair. In some industries, regulatory restrictions stipulate the requirements of a repair made to a composite component, for example the size of a bonded repair on an aircraft structure is limited. Moreover, replacing carbon fibre reinforced polymer components that form part of a large structure, such as an aircraft wing, can be difficult, time-consuming and expensive.

### Summary of the Invention

In accordance with embodiments of the invention, there is provided a method of repairing a defect in a structure comprising a skin made from a composite material and a stringer attached to an inner surface of said skin, wherein the method comprises the steps of:
- cutting a section of stringer from the skin in the vicinity of the defect;
- positioning a repair plate on the inner surface over the defect so that it extends between opposing cut ends of the stringer, wherein the repair plate comprises recesses and the step of positioning the repair plate on the inner surface of the skin comprises positioning the repair plate such that the opposing cut ends of the stringer extend into the recesses;
- positioning a stringer repair part on the repair plate, the stringer repair part being of a length sufficient to overlap each cut end of the stringer;
- attaching the repair plate to the skin; and,
- attaching the stringer repair part to the stringer in a region of overlap at each cut end.

The step of attaching the repair plate to the skin may comprise using one or more fasteners. The step of attaching the stringer repair part to the stringer in a region of overlap at each cut end may comprise using one or more fasteners.

The method may further comprise the step of cutting a section of the skin comprising the defect to form an opening in the skin.

The method may further comprise the steps of positioning an outer repair plate within the opening and attaching the outer repair plate to the repair plate. The step of attaching the outer repair plate to the repair plate may comprise using one or more fasteners.

The method may further comprise the step of cutting a rebate in the periphery of the opening to receive the outer repair plate.

The method may further comprise attaching the outer repair plate to the repair plate and the skin by means of a plurality of fasteners that extend through the outer repair plate, skin and repair plate, wherein the fasteners are aligned with the rebate.

The cut stringer may have a flange which is attached to the skin and a web which extends away from the flange, and the stringer repair part maybe an L-shaped repair part which is positioned such that it extends between the opposing ends of the stringer and overlaps with a portion of the flange and the web at each end.

The method may include the step of positioning a spacer between the stringer repair part and the stringer.

The method may include the step of positioning first and second stringer repair parts on the repair plate and positioning a spacer between the first and second stringer repair parts. The method may further comprise the step of attaching the stringer repair part to the repair plate.

The method may further comprise the step of attaching the repair plate to a rib which is proximate to the defect in the skin.

The method may further comprise cutting a section of the rib such that the repair plate and/or the stringer repair part can extend between the rib and the skin.

The composite material may be carbon fibre reinforced polymer.

In accordance with embodiments of the invention, there is also provided apparatus for repairing a defect in a structure comprising a skin made from a composite material and a stringer attached to an inner surface of said skin, wherein the apparatus comprises:
- a repair plate for positioning on the inner surface over the defect, once a section of stringer in the vicinity of a defect has been cut, so that it extends between opposing cut ends of the stringer, wherein the repair plate comprises recesses configured to surround said opposing cut ends of said stringer when the repair plate is positioned on said inner surface of said skin;
- a stringer repair part for positioning on the repair plate, the stringer repair part being of a length sufficient to overlap each cut end of said stringer;
- means for attaching the repair plate to said skin; and,
- means for attaching the stringer repair part to said stringer in a region of overlap at each cut end.

A region of said skin comprising the defect may have been removed to form an opening and the apparatus may further comprise an outer repair plate for positioning within said opening.

The outer repair plate may be configured to be received in a rebate formed in a periphery of said opening.

The apparatus may further comprise a plurality of fasteners to attach the outer repair plate to the repair plate and said skin, the fasteners being configured to extend through the outer repair plate, skin and repair plate such that they are aligned with said rebate.

The stringer may comprise a flange attached to said skin and a web extending away from said flange, and wherein the stringer repair part is L-shaped and configured to overlap with a portion of said flange and said web at each end.

The apparatus may further comprise a spacer configured to be positioned between the stringer repair part and said stringer.

The apparatus may include first and second stringer repair parts and a spacer to be positioned between the first and second stringer repair parts.

The repair plate and/ or the outer repair plate and/ or the stringer repair plate may be made from a composite material.

The composite material may be carbon fibre reinforced polymer.

In accordance with embodiments of the invention, there is also provided a structure repaired using the apparatus described above.

### Brief Description of the Drawings

Embodiments of the invention will now be described, by way of example only, with reference to the drawings in which:
Figure 1 shows an internal view of a damaged aircraft wing;
Figure 2 shows an inner repair part;
Figure 3 shows the inner repair part of Figure 2 positioned on the damaged aircraft wing of Figure 1;
Figure 4 shows spacers inserted between the inner repair part and a stringer of the damaged aircraft wing;
Figure 5 shows stringer repair parts positioned on the damaged aircraft wing;
Figure 6 shows an internal view of an aircraft wing that has been repaired;
Figure 7 shows a recess in an outer surface of the wing panel;
Figure 8 shows a cross-section of an aircraft wing that has been repaired; and,
Figure 9 shows an example of an aircraft wing that has been repaired, wherein the damage occurred in the vicinity of a rib.

### Detailed Description

The invention relates to a method and an apparatus for repairing components of a damaged structure which are made from a composite material, such as carbon fibre reinforced polymer. The structure may be damaged by an impact or other cause which, in the case of an aircraft wing, fuselage or other component for example, may occur during flight or whilst on the ground. In the example of an aircraft structure, accidental damage may be caused during maintenance or taxiing the aircraft. Also, damage may occur by mistake whilst maintaining or moving other parts of the aircraft. Any fractures or other fissures in a damaged composite material can compromise the strength and integrity of the material. It is difficult to produce composite components with complex shapes as the fibre and polymer components need to be laid onto a mould which defines the shape of the resulting component. Moreover, it is difficult and often not possible to machine a composite material that has already been cured into a desired complex shape without significantly weakening the component.

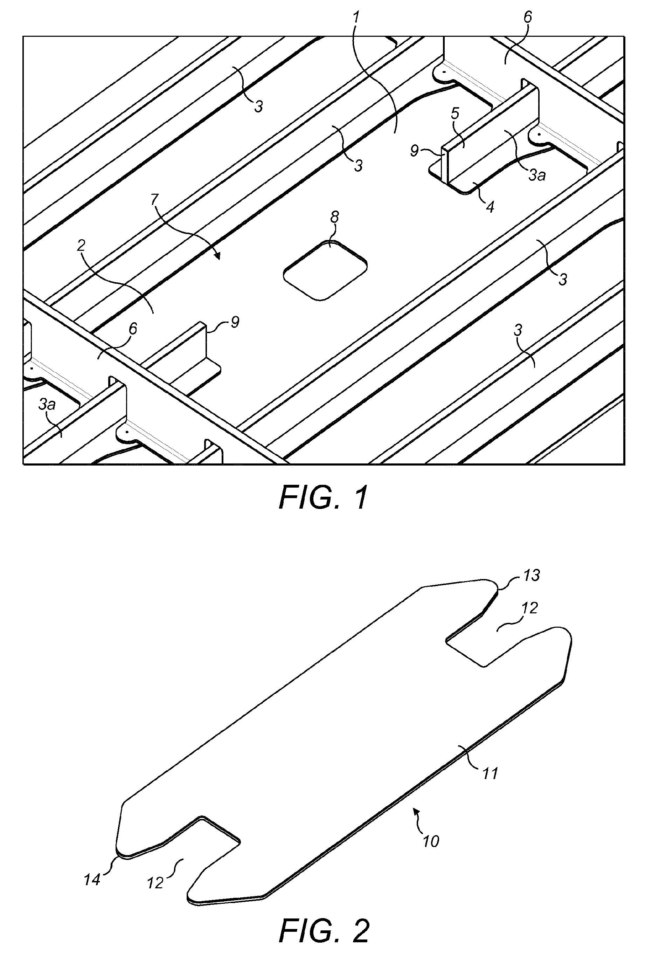

Figure 1 shows an internal view of a part of an aircraft wing. The wing has a skin which comprises a plurality of panels which form the outer aerodynamic surface of the wing. The inner surface 2 of the skin panel 1 is attached to a plurality of stringers 3 which are elongate structural elements that extend lengthwise along the wing, from the fuselage in the direction of the wing tip. The stringers 3 have a 'T' shape with a flange 4 and a web 5 extending from the flange 4. In this example, the web 5 extends from a mid-point of the flange 4, but the position of the web 5 on the flange 4 may vary. The flange 4 and the web 5 may be at right angles to each other, substantially at right angles to each other or at another angle. For example, the web 5 may be up to 20 degrees either side of the perpendicular position (in which the web 5 at is 90 degrees to the flange 4). The flange 4 is disposed against, and attached to, the inside surface 2 of the skin panel 1, and the web 5 protrudes away from the skin panel 1 to provide strength and rigidity. The flange 4 of the stringer 3 is attached to the skin panel 1 by means of an adhesive or resin, or by fasteners or another suitable means of attachment. Also, the skin panel 1 is attached to a plurality of ribs 6 which are elongate structural elements that extend across the wing, in a direction between the trailing edge and the leading edge of the wing. The ribs 6 and stringers 3 give structural rigidity and strength to the wing and the skin panels 1 provide the aerodynamic surface.

Figure 1 shows a damaged wing which has been cleaned up to remove the damaged material. In particular, the skin panel 1 of the wing has a damaged region 7 and a part of one stringer 3a has also been damaged. The damaged region 7 of the skin panel 1 may have a hole or it may be a crack, fraying or de-lamination of the composite material. As shown in Figure 1, the damage to the components of the wing has been cleaned up by removing the damaged material from the stringer 3a and skin panel 1. The damaged material can be cut, abraded or machined away. In the example shown in Figure 1, the damaged region 7 of the skin panel 1 has been removed to leave an opening 8 with a generally rectangular shape with rounded corners, although the shape of the opening 8 will vary according to the shape and extent of the damage and the method of removing the damaged material. Damaged material has also been removed from the stringer 3a, which has been cut back to leave two opposing cut ends 9 and the opening 8 in the skin panel 1 disposed between those opposing cut ends 9 of the stringer 3a. In this example, the location of the damage is in a part of the skin panel 1 that is aligned with a stringer 3a and intermediate two ribs 6. However, in the context of aircraft structures and, in particular, wings, it will be appreciated that the damage may occur at any point on the wing and the invention will still be applicable for repairing the damage, as will explained hereinafter. Given the relative proximity of stringers within the wing, it is likely that if a skin panel 1 of a wing is damaged then at least one stringer will also be damaged or be proximate to the damage and will therefore need to be repaired.

Non-destructive analysis may be used to identify the damaged areas of the composite skin panel 1 and stringer 3a, for example an ultrasound system can be used to identify fissures in the composite material. Once a sufficient amount of the damaged material has been removed from the skin panel 1 and stringer 3a, and the opening 8 and other edges are smoothly shaped to limit stress concentrations, the damage can be repaired as described below.

During repair of the damaged skin panel 1 and stringer 3a it is important to maintain a smooth external surface and to provide the stringer 3a and the skin panel 1 with structural integrity. The smooth external surface of the skin panel 1 is important for the wing's aerodynamic properties. The surface of the wing may be designed to induce lift and the outer surface usually has to be smooth to avoid generating aerodynamic drag or vortices. Moreover, a smooth external surface has aesthetic benefits and is preferred by passengers and airline operators.

Figures 2 to 6 show sequential images of the wing during a method of repairing the damaged wing described with reference to Figure 1.

Figure 2 shows an inner repair plate 10 which has a substantially elongate rectangular shaped body 11. A recess 12 is formed in each of two opposite ends 13, 14. The inner repair plate 10 is configured to be positioned against the inner surface 2 (see Figure 1) of the skin panel 1 (see Figure 1) and cover the damaged region 7 (see Figure 1). The recesses 12 in the ends 13, 14 of the inner repair plate 10 are configured to engage with the stringer, as will be described hereinafter. In this example, the inner repair plate 10 is flat and planar, but it will be appreciated that it may be curved or have another profile that matches the interior profile of the part of the skin panel being repaired.

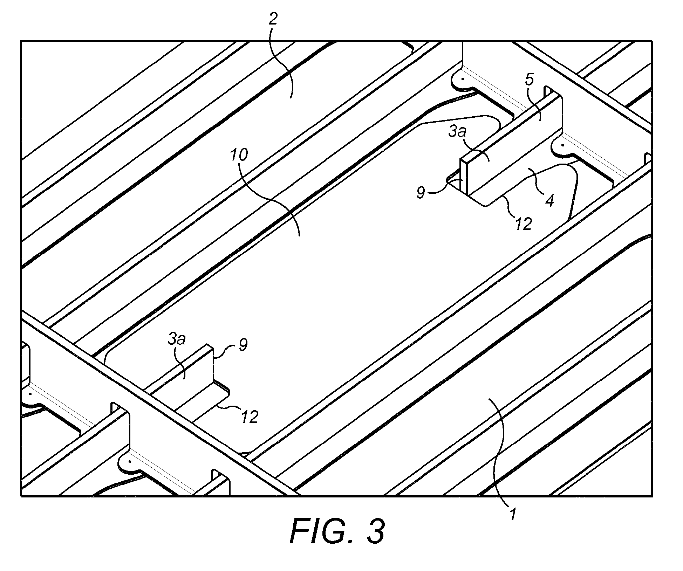

Figure 3 shows the inner repair plate 10 of Figure 2 positioned on the damaged wing described with reference to Figure 1. In particular, the inner repair plate 10 is positioned in between the opposing ends 9 of the stringer 3a such that the opposing ends 9 of the stringer 3a extend into the recesses 12 in the ends 13, 14 of the inner repair plate 10. As shown, the recesses 12 of the inner repair plate 10 have a similar width to the flange 4 of the stringer 3a which is attached to the inner surface 2 of the skin panel 1. Therefore, the recesses 12 engage with the flanges 9 of the damaged stringer 3a and the position of the inner repair plate 10 in relation to the stringer 3a is fixed. It will be appreciated that the size and configuration of the inner repair plate 10 may be defined by the amount of material that has been removed from the stringer 3a, thereby defining the distance between the opposing ends 9. Alternatively, material may be removed from the stringer 3a so that an inner repair plate 10 of a specific size will fit between the opposing ends 9.

As shown in Figure 3, the inner repair plate 10 covers the damaged region 7 (see Figure 1) of the skin panel 1 and will cover the opening 8 (see Figure 1) in the skin panel 1 which may have been formed by removing damaged material. Therefore, the width of the inner repair plate 10 is at least as wide as the extent of the defect in the skin panel 1, and is preferably wider. The position of the inner repair plate 10 is defined by the engagement between the recesses 12 at each end 13, 14 0f the inner repair plate 10 and the opposing ends 9 of the stringer 3a.

In the example shown in Figure 3, the recesses 12 are located mid-way between the sides of the inner repair plate 10. However, it will be appreciated that the recesses 12 may be moved to an off-centre position, and the shape and width of the inner repair plate 10 maybe different so that it covers a different area of the skin panel 1 to ensure that the inner repair plate 10 will cover the defect in the skin panel 1 whether or not the defect is aligned with the stringer 3a. For example, if a skin panel is damaged in a position which is offset from a stringer then the inner repair plate may extend further in that direction to cover the damaged region.

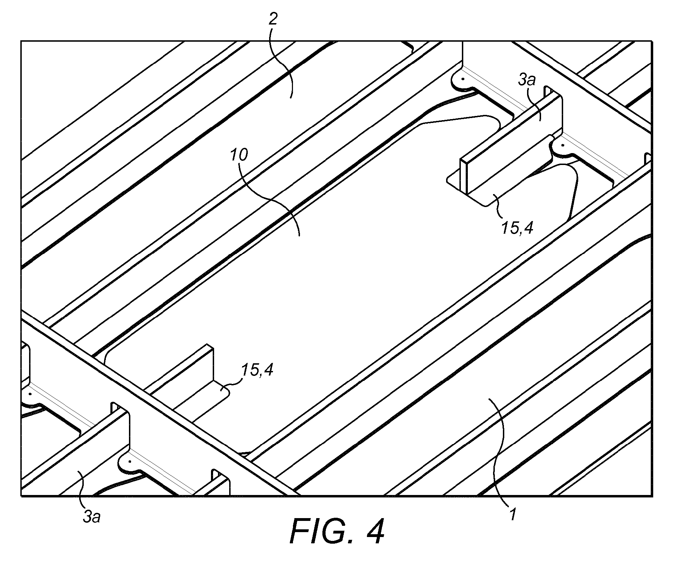

The inner repair plate 10 is positioned against the inner surface 2 of the skin panel 1 and the thickness of the inner repair plate 10 maybe configured to match the thickness of the flange 4 of the stringer 3a. However, should the inner repair plate 10 be thicker than the flange 4 of the stringer 3a, to give additional strength or rigidity, there will be a height difference between the inner repair plate 10 and the flange 4 of the stringer 3a, as shown in Figure 3. As shown in Figure 4, one or more spacers 15 maybe positioned on top of the flange 4 of the stringer 3a, so that a level surface is defined between the top of the spacers 15 and the inner repair plate 10, for reasons that will become apparent hereinafter.

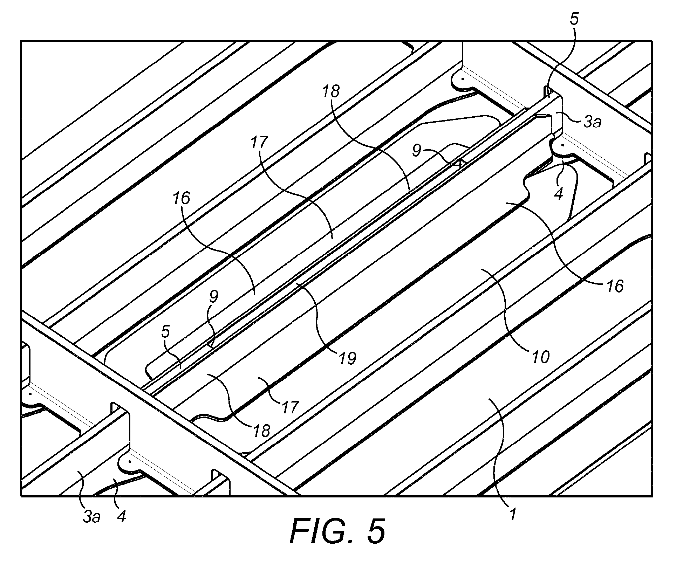

Figure 5 shows a next stage in the method of repairing the damaged wing, with two stringer repair parts 16 being positioned to extend between the opposing ends 9 of the stringer 3a. The stringer repair parts 16 are positioned on the inner repair plate 10 and extend from one cut end 9 of the stringer 3a to the other cut end 9 of the stringer 3a and overlap the cut ends 9 of the stringer 3a. In particular, the stringer repair parts 16 are elongate L-shaped components with a first part 17 and a second part 18 and, in this example, the second part 18 is perpendicular to the first part 17. The stringer repair parts 16 are positioned on the stringer 3a so that the first part 17 of each stringer repair part 16 contacts the flange 4 of each end of the stringer 3a, or, if used, the spacer 15 (see Figure 4), and the inner repair plate 10. The second part 18 of the stringer repair part 16 contacts the web part 5 of each end of the stringer 3a. It will be appreciated that in other examples within the exemplary context of aircraft wings, the web 5 and flange 4 of the stringer 3a may not be perpendicular, in which case the first part 17 and second part 18 of the stringer repair parts 16 may not be perpendicular, but will match the stringer 3a.

The spacer 15 described with reference to Figure 5, which provides a level surface between the top of the spacers 15 and the inner repair plate 10, is advantageous because it avoids the need for the stringer repair part 16 and/ or the inner repair plate 10 to have a stepped profile or a joggle formed of two adjacent reverse bends in an edge of the component. That is, without the spacers 15 either the stringer repair parts 16 or the inner repair plate 10 would have to be machined or formed to have a recess, step or joggle extending along the component so that the stringer repair part 16 and flange 4 of the stringer 3a are aligned at the same distance from the inner surface 2 of the skin panel 1. As previously described, recesses and other complex geometry is problematic for composite components. The spacers 15 occupy the space between the stringer repair parts 16 and the flange 4 of the stringer 3a and this avoids the need of a stepped profile or a joggle in the composite part.

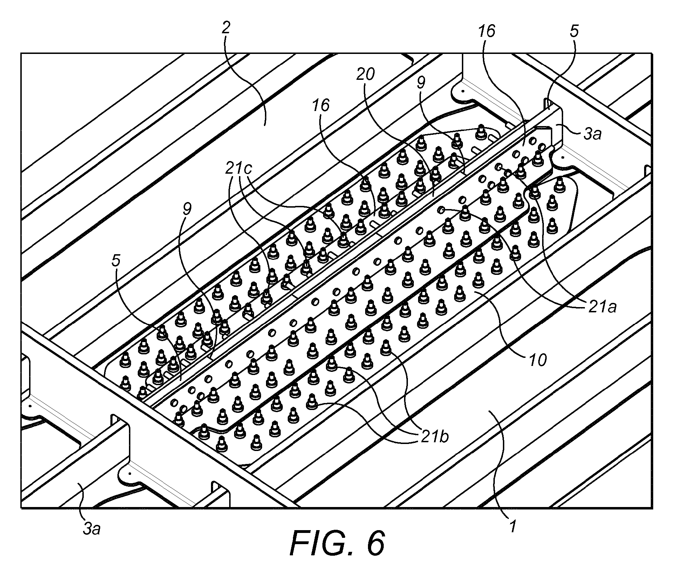

As shown in Figure 5, in this example two stringer repair parts 16 are positioned such that they extend between the opposing ends 9 of the stringer 3a with one repair part 16 positioned on each side of the web 5 of the stringer 3a. The stringer repair parts 16 overlap the stringer 3a in a region of overlap formed at each end 9 of the stringer 3a so that the stringer repair parts 16 can be attached to the stringer 3a. This leaves a space 19 between the second parts 18 of each stringer repair part 16, the space being the same width as the thickness of the web 5 of the stringer 3a. As shown in Figure 6, one or more spacers 20 may be disposed in the space 19 (see Figure 5) between the two stringer repair parts 16. These spacers will have substantially the same thickness as the web 5 of the stringer 3a. Advantageously, the spacer 20 between the stringer repair parts 16 means that the second parts 18 of the two stringer repair parts 16 can be planar, with no stepped profile or joggle required.

It will be appreciated that a single stringer repair part 16 may be used if the stringer 3a is smaller or if there is insufficient space for a second stringer repair part 16.

Also shown in Figure 6, a plurality of fasteners 21 are used to attach the stringer repair parts 16 to the stringer 3a and to each other, and also to attach the inner repair plate 10 to the skin panel 1. Furthermore, a plurality of fasteners 21 are used to attach the inner repair plate 10 to the stringer repair parts 16. In this way, the stringer 3a and the skin panel 1 are attached to each other via the inner repair plate 10 and the stringer repair parts 16 which extend over and replace the damaged parts of the skin panel 1 and stringer 3a. In this example, there are three different groups of fasteners: a first group of fasteners 21a, a second group of fasteners 21b and a third group of fasteners 21c.

The first group of fasteners 21a extend through the second part 18 of each stringer repair part 16 and through the one or more intermediate spacers 20 to attach the two stringer repair parts 16 to each other. Also, where the stringer repair parts 16 overlap with the stringer 3a, the first group of fasteners 21a extend through the remaining web 5 of the stringer 3a. In this way, the stringer repair parts 16 are attached to each other and to the ends 9 of the stringer 3a.

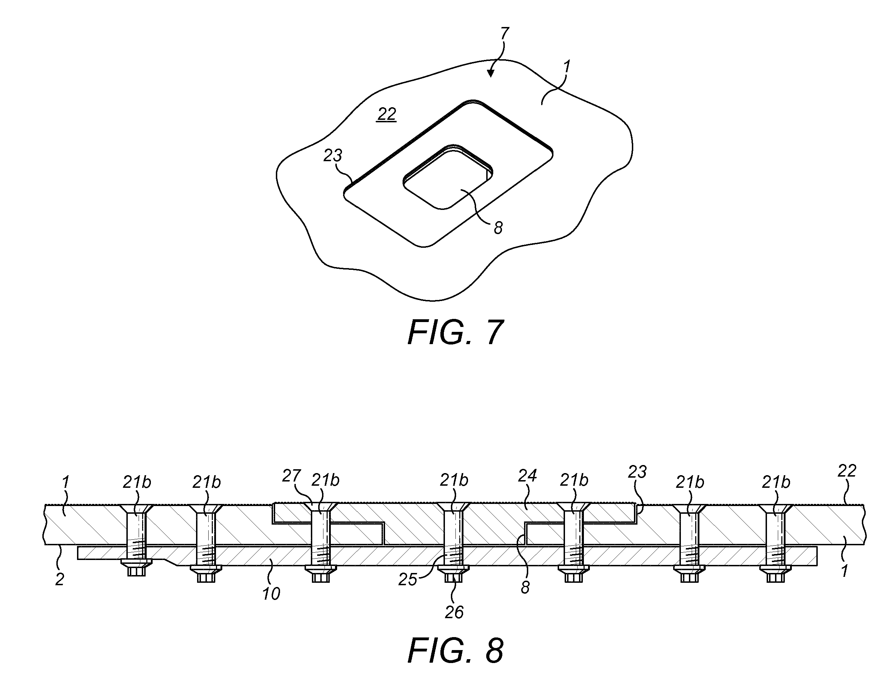

The second group of fasteners 21b extend through the inner repair plate 10 and the skin panel 1 to attach the inner repair plate 10 directly to the inside surface 2 of the skin panel 1. Some of the second group of fasteners may also extend through an outer repair plate (24, see Figure 8), as will be explained hereinafter.

The third group of fasteners 21c extend through the first part 17 off each stringer repair part 16, through the inner repair plate 10 and through the skin panel 1 to join together the stringer repair parts 16 and the skin panel 1 with the inner repair plate 10 in between. Some of the third group of fasteners may also extend through an outer repair plate (24, see Figure 8), as will be explained hereinafter.

The fasteners 21 described with reference to Figure 6 ensure that the repair components are adequately attached to the damaged components and that the structural integrity of the repaired wing is sufficient. The repaired wing needs to be adequately strong and rigid to deal with the loads and stresses being applied to the wing during operation and the inner repair plate 10 and stringer repair parts 16 will provide most of the strength and rigidity required. However, as the wing is placed under bending loads, the skin panels in the wing will experience tension and/ or compression and in regions where the wing has been repaired and this will result in a shear force acting between the different components. In particular, the fasteners that extend through the inner repair plate 10, skin panel 1 and outer repair plate (24, see Figure 8) will experience a shear load.

Figure 7 shows a view of the outer surface 22 of the damaged skin panel 1. As shown, the damaged region 7 of the skin panel 1 has been removed to create an opening 8 and the opening 8 has also been provided with a rebate 23. The rebate 23 is configured to receive an outer repair plate (24, see Figure 8), which is received in the rebate 23 and occupies the space of the opening 8. The rebate 23 in the opening of the damaged skin panel 1 allows the outer repair plate to sit flush with the outer surface 22 of the skin panel 1 when the repair is complete, as explained in more detail with reference to Figure 8. Therefore, the aerodynamic performance of the skin panel 1 is not affected.

In an alternative example, the opening 8 does not comprise a rebate and the outer repair plate (24, see Figure 8) is received in the opening 8 and attached to the inner repair plate and may also be attached to the stringer repair parts.

Figure 8 shows a cross section through a wing that has been repaired. The stringer repair parts are not shown in the cross-section of Figure 8. The cross-section shows the skin panel 1 with the opening 8 created by removing the defect, as well as the inner repair plate 10 and an outer repair plate 24, all attached to each other by fasteners 21b. As shown, the outer repair plate 24 is received in a rebate 23 cut into the outer surface 22 around the periphery of opening 8 in the skin panel 1, so that the outer repair plate 24 is flush with the outer surface 22 and does not disturb the aerodynamic performance of the skin panel 1 and aesthetic qualities are maintained. Also shown, the inner repair plate 10, skin panel 1 and outer repair plate 24 are attached to each other by fasteners 21b that extend through each of the inner repair plate 10, skin panel 1 and outer repair plate 24. In this drawing the fasteners are the second group of fasteners 21b described with reference to Figure 6.

In particular, as shown in Figure 8, at least one fastener 21b will join the inner repair plate 10 to the skin panel 1, at least one fastener 21b will join the outer repair plate 24 to the inner repair plate 10, and at least one fastener 21b will join the inner repair plate 10 to both the skin panel 1 and the outer repair plate 24.

In this example, the outer repair plate 24 has a rebated edge which matches the rebate 23 in the peripheral edge of the opening 8. Therefore, a portion of the outer repair plate 24 overlaps the skin panel 1 and fasteners 21b can extend through the outer repair plate 24, skin panel 1 and inner repair plate 10 to attach these components together. When a bending load is placed on the wing the skin panel is placed under either compression or tension and the fasteners 21b that extend through the outer repair plate 24, the skin panel 1 and/or the inner repair plate 10 will experience a shear load, which may be double lapped. For example, the fastener 21b that extends through each of the outer repair plate 24, the skin panel 1 and the inner repair plate 10 will experience a double lap shear load, as represented by the arrows shown in Figure 8. This arrangement is preferable to a standard shear load that will be applied to other fasteners 21b in the repaired wing which extend through only two components and therefore experience a twisting force which may cause the fasteners to peak in the apertures. Also, in the arrangement shown in Figure 8, the outer repair plate 24 and the inner repair plate 10 are load bearing.

In an alternative example, the outer repair plate 24 may not comprise a rebate and may be a flat component received in the rebate 23 on the edge of the opening 8 of the skin panel 1. In this example, a spacer can be placed in between the inner repair plate 10 and the outer repair plate 24 to occupy the intermediate space. In this case, the outer repair plate 24 and the inner repair plate 10 will be load bearing, but the intermediate spacer will not be.

In another example, if the thickness of the skin panel 1 is sufficient, the inner surface 2 of the damaged skin panel 1 may be provided with a rebate such that the inner repair plate 10 is received in the rebate and sits flush with the inner surface 2 of the skin panel 1. In this example, additional spacers or other components may be required between the inner repair plate 10 and the stringer repair parts 16 (see Figure 6).

It will be appreciated that by positioning the inner repair plate 10 and/ or the outer repair plate 24 in a rebate the shear load is more favourably applied to the fasteners 21b extending through the components and the aerodynamic and aesthetic properties of the outer surface of the wing are maintained.

As shown in Figure 8, the fasteners 21b extend through apertures provided in the skin panel 1, inner repair plate 10 and outer repair plate 24. In this example, each fastener 21b is a bolt 25 and a nut 26 is provided on the inner side of the skin panel 1 to secure the components together. Also shown in Figure 8, the head 27 of each bolt 25 has a conical shape and the outer end of each of the apertures for the bolt 25 is provided with a countersunk profile to receive the bolt heads 27 so that the top of the bolt head 27 is flush with the outer surface 22 of the skin panel 1. In this way, the aerodynamic properties of the skin panel 1 are not affected.

In some examples, one or more layers of protective material (not shown) maybe installed on the outer surface 22 of the skin panel 1 (the aerodynamic surface) in order to protect the repaired region of the skin panel 1 from electromagnetic hazards. The protective material may be installed prior to the fasteners 21 being attached to the repair parts, or the fasteners may be concealed beneath the protective material.

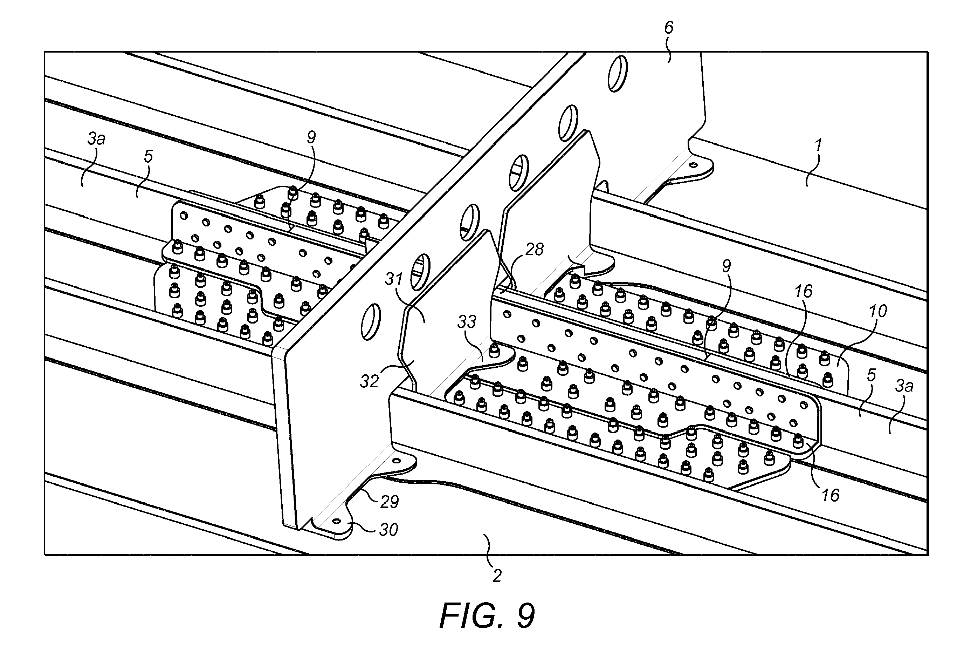

Figure 9 shows an example of a repaired composite wing that is similar to that described with reference to Figure 6. However, in this example the damage caused to the skin panel 1 is in the vicinity of, or aligned with, a rib 6 of the aircraft wing as well a stringer 3a. Therefore, the inner repair plate 10 and the stringer repair parts 16 extend through the rib 6 to repair the damaged material. As shown, the inner repair plate 10 and the stringer repair parts 16 are attached to the skin panel 1 and the stringer 3a in the same manner as previously described: the inner repair plate 10 is placed on the inner surface 2 of the skin panel 1 and covers the damaged region and any opening; and, the stringer repair parts 16 extend between the opposing ends 9 of the stringer 3a. The recess 28 in the rib 6, through which the web 5 of the stringer 3a usually extends, can be enlarged to allow for the stringer repair parts 16 to extend through the rib 6. Moreover, the face 29 of the rib 6 which is usually attached to the skin panel 1 can be machined back to create space for the inner repair plate 10 to extend past the rib 6. It will be noted that the face 29 of the rib 6 may have been removed due to damage and additional material may be removed to clean up any damaged area.

As shown in Figure 9, in an undamaged region, the rib 6 comprises a flange 30 which is directly attached to the skin panel 1 of the wing. However, if the skin panel 1 is damaged this attachment may not be possible and the material of the skin panel 1 may be damaged, the flange 30 maybe damaged, and/or the flange 30 maybe removed to create space for the inner repair plate 10 to extend past the rib 6.

Therefore, as shown in Figure 9, at least one bracket 31 can be utilised to connect the repaired skin panel 1 to the rib 6 to maintain the structural arrangement of an undamaged wing. In particular, a bracket 31 may attach the rib 6 to the inner repair plate 10 and/or a stringer repair part 16 and/or a part of the skin panel 1 which remains undamaged. In the example shown in Figure 9, a first part 32 of the bracket 31 is attached to a side face of the rib 6, for example by welding, bonding or by use of fasteners. A second part 33 of the bracket, which is approximately perpendicular to the first part 32, is attached to both the inner repair plate 10 and to the stinger repair part 16. Therefore, the repaired skin panel 1 and stringer 3a are attached to the rib 6 and this provides the same structural characteristics as the original structure.

It will be appreciated that the rib maybe made from a metal, such as aluminium, or from a composite material, such as carbon fibre reinforced polymer, and the means for attaching components, particularly the bracket, to the rib are selected accordingly. For example, the means for attachment may include fasteners, adhesive, resins or welding.

In the above described method of repairing a damaged wing which is made from composite materials, the only machining and reworking of any composite component is the removal of the damaged material from the skin panel 1 and stringer 3a. Therefore, composite components can be provided which are purpose-made and have simple geometric features, that have not been machined or laid up in a complex manner. This simplifies the repair process, reduces the cost and time of the repair process, and improves the strength and reliability of the repair.

Also, the method described above allows a standard repair kit to be used to repair damage to a composite wing. As explained, material can be removed from the damaged components so that a standard size inner repair plate, outer repair plate and stringer repair parts can be used to repair the wing. These repair kits may come in various different sizes.

The method described with reference to Figures 1 to 8 requires the following apparatus and components in order to repair a damaged wing made of a composite material:
- an inner repair plate 10;
- at least one stringer repair part 16; and,
- fasteners 21.

Optionally, the apparatus may include an outer repair plate 24 that is received in an opening 8 formed in the skin panel 1.

Depending on the arrangement of the repair parts, as explained previously, the apparatus may include spacers that can be positioned between the stringer repair parts 16 and the stringer 3a, between two stringer repair parts 16, or between the outer repair plate 24 and the inner repair plate 10. Moreover, if the damage is proximate to a rib, as described with reference to Figure 9, then the apparatus may include one or more brackets 31 used to attach the repair parts to the rib. In some cases, more than bracket 31 may be used and the brackets 31 may have various shapes, as required by the specific repair scenario.

It should be noted that depending on the location, shape and extent of the damage and the surrounding components any repair components may have shapes that are appropriate. For example, if two stringer repair parts are used then they may not be identical, and the same applies for other repair components that are provided in pairs.

An advantage of using this apparatus to repair a damaged composite structure, such as an aircraft wing is that, at the point of repair, the engineer only needs the relevant components and a means of cutting the damaged material from the skin panel, stringer and rib. There is no requirement for means for producing carbon fibre reinforced polymer, such as an autoclave and the relevant carbon fibre and polymer materials and facilities for laying up. There is also no requirement to machine or alter the components being used to repair the wing, including the inner repair plate 10, outer repair plate 24 and stringer repair parts 16, which may require complex machining equipment.

It will be appreciated that the method and apparatus described herein may be used to repair other parts of an aircraft that are made from composite materials, especially other parts of the external skin of an aircraft such as the fuselage. Also, it will be appreciated that the method and apparatus described herein may be used to repair damaged composite components on other types of structure, vehicle or machine, such as waterborne vessels and automobiles. In particular, the method and apparatus of repair is useful for damaged components that are not easily replaceable, or if it is prohibitively expensive to do so.

## Claims

1. A method of repairing a defect in a structure comprising a skin made from a composite material and a stringer attached to an inner surface of said skin, wherein the method comprises the steps of:
- cutting a section of stringer from the skin in the vicinity of the defect;
- positioning a repair plate on the inner surface over the defect so that it extends between opposing cut ends of the stringer, wherein the repair plate comprises recesses and the step of positioning the repair plate on the inner surface of the skin comprises positioning the repair plate such that the opposing cut ends of the stringer extend into the recesses;
- positioning a stringer repair part on the repair plate, the stringer repair part being of a length sufficient to overlap each cut end of the stringer;
- attaching the repair plate to the skin; and,
- attaching the stringer repair part to the stringer in a region of overlap at each cut end.

2. The method of claim 1, further comprising the step of cutting a section of the skin comprising the defect to form an opening in the skin.

3. The method of claim 2, further comprising the steps of positioning an outer repair plate within the opening and attaching the outer repair plate to the repair plate.

4. The method of claim 3, further comprising the step of cutting a rebate in the periphery of the opening to receive the outer repair plate.

5. The method of claim 4, further comprising attaching the outer repair plate to the repair plate and the skin by means of a plurality of fasteners that extend through the outer repair plate, skin and repair plate, wherein the fasteners are aligned with the rebate.

6. The method of any preceding claim, wherein the cut stringer has a flange which is attached to the skin and a web which extends away from the flange, and wherein the stringer repair part is an L-shaped repair part which is positioned such that it extends between the opposing ends of the stringer and overlaps with a portion of the flange and the web at each end.

7. The method of any preceding claim, including the step of positioning a spacer between the stringer repair part and the stringer.

8. The method of any preceding claim, further comprising the step of attaching the stringer repair part to the repair plate.

9. The method of any preceding claim, further comprising the step of attaching the repair plate to a rib which is proximate to the defect in the skin.

10. The method of claim 9, further comprising cutting a section of the rib such that the repair plate and/or the stringer repair part can extend between the rib and the skin.

11. The method of any preceding claim, wherein the composite material is carbon fibre reinforced polymer.

12. Apparatus for repairing a defect in a structure comprising a skin made from a composite material and a stringer attached to an inner surface of said skin, wherein the apparatus comprises:
- a repair plate for positioning on said inner surface over said defect, once a section of stringer in the vicinity of a defect has been cut, so that it extends between opposing cut ends of said stringer, wherein the repair plate comprises recesses configured to surround said opposing cut ends of said stringer when the repair plate is positioned on said inner surface of said skin;
- a stringer repair part for positioning on the repair plate, the stringer repair part being of a length sufficient to overlap each cut end of said stringer;
- means for attaching the repair plate to said skin; and,
- means for attaching the stringer repair part to said stringer in a region of overlap at each cut end.

13. The apparatus of claim 12, wherein a region of said skin comprising the defect has been removed to form an opening, the apparatus further comprising an outer repair plate for positioning within said opening.

14. The apparatus of claim 13, wherein the outer repair plate is configured to be received in a rebate formed in a periphery of said opening.

15. The apparatus of claim 14, further comprising a plurality of fasteners to attach the outer repair plate to the repair plate and said skin, the fasteners being configured to extend through the outer repair plate, skin and repair plate such that they are aligned with said rebate.

16. The apparatus of any of claims 12 to 15, wherein said stringer comprises a flange attached to said skin and a web extending away from said flange, and wherein the stringer repair part is L-shaped and configured to overlap with a portion of said flange and said web at each end.

17. The apparatus of any of claims 12 to 16, further comprising a spacer configured to be positioned between the stringer repair part and said stringer.

18. The apparatus of any of claim 12 to claim 17, wherein the repair plate and/ or the outer repair plate and/or the stringer repair plate is made from a composite material.

19. The apparatus of claim 12 to claim 18, wherein the composite material is carbon fibre reinforced polymer.

20. A structure repaired using the apparatus of any of claims 12 to 19.
